# EUROPEAN PATENT SPECIFICATION

(11) **EP 2 596 731 B1**
(45) Date of publication and mention of the grant of the patent: **14.05.2014**
(21) Application number: 12007433.1
(22) Date of filing: 30.10.2012
(51) Int. Cl.: A47K 13/10, F16F 9/16, F16F 9/19

(54) **Viscous braking device**
LINEARER DÄMPFER MIT VISCOSEM FLUID
DISPOSITIF D 'AMORTISSEMENT LINEAIRE AVEC LE FLUIDE VISQUEUX

(30) Priority: 23.11.2011 IT TO20111078
(43) Date of publication of application: 29.05.2013
(73) Proprietor: Fandis S.p.A., 20121 Milano (IT); Zangirolami, Marco, 28040 Borgo Ticino (NO) (IT)
(72) Inventor: Zangirolami, marco, I-28040 Borgo Ticino (NO) (IT)
(74) Representative: Garavelli, Paolo

(56) References cited:
- WO-A1-2010/070624
- BE-A- 547 854
- US-A- 1 759 266
- US-A- 1 833 490
- US-A- 4 241 814

## Description

The present invention refers to a viscous braking device, in particular adapted to be used for braking the descent of a table-cover of a WC cup.

For explanation purposes, the invention will be described as applied to the field of braking the descent of a table-cover of a WC cup, but it will be immediately obvious that the device of the invention can be applied in any other situation in which the problem of dampening a closing and/or opening motion must be solved.

Prior art braking devices are disclosed in WO-A-03046405, GB-A-259839, US-A-4241814, BE-A-512983, JP-A-2007071290, GB-A-1331397, DE-A-3718705, US-A-1759266, WO-A-2010/070624, US-A-1833490 and BE-A-547854. In particular, US-A-1759266 discloses a viscous braking device according to the preamble of Claim 1; moreover, WO-A-03046405 discloses a viscous braking device composed of a metallic rotor rotating inside a casing containing a chamber partitioned into two compartments. The rotor in turn has wings and is equipped with mobile holding members to prevent an oil with very high viscosity to pass between the two pressurised chambers during the rotation and the two discharge chambers: the resulting counter-pressure generates the torque that opposes the rotation. Moreover, both on the metallic rotor and on the internal wall of the casing, there are grooves and thickness variations to change the brake behaviour according to the angle at which the brake is. Such device however has the following inconveniences:
- the casing has a thickness variation of the external wall that increases next to the area with greater pressure to compensate for the fact that the pressure is badly distributed on the casing walls and tends to distort it, causing malfunctions;
- the pressure inside the chambers reaches very high values (about 30 Bar) and, in case of forcing the device, can generate breakage phenomena or even the casing burst;
- the maximum rotation angle is about 110°;
- it requires the use of oil with very high viscosity (4-5 MStk or more) with consequent difficulty and prolonged filling times.

Therefore, object of the the present invention is solving the above prior art problems by providing a viscous braking device in which the braking effect is obtained by exploiting the operating principle of the hydraulic press.

Moreover, an object ot the present invention is providing a viscous braking device in which the internal pressure generated by the viscous fluid is radially distributed, strongly limiting the possible breakages or bursts of the device in case of forcing.

Another object of the present invention is providing a viscous braking device that allows reaching any type of rotation angle.

Moreover, an object of the present invention is providing a viscous braking device in which the braking force decreases upon increasing the rotation angle.

Another object of the present invention is providing a viscous braking device in which the braking force changes according to a predetermined hourly law depending on the positioning angle.

Moreover, an object of the present invention is providing a more reliable, less expensive viscous braking, which can be built more simply than what is proposed by the prior art.

Another object of the present invention is providing a viscous braking device that allows using a braking fluid whose viscosity is much lower than what is required by prior art devices.

Moreover, an object of the present invention is providing a viscous braking device that can be easily dimensioned and segmented in terms of hourly braking and braking torque laws.

The above and other objects and advantages of the invention, as will result from the following description, are obtained with a viscous braking device as claimed in claim 1. Preferred embodiments and non-trivial variations of the present invention are the subject matter of the dependent claims.

It is intended that the enclosed claims form an integral part of the present description.

It will be immediately obvious that numerous variations and modifications (for example related to shape, sizes and parts with equivalent functionalities) can be made to what is described, without departing from the scope of the invention as appears from the enclosed claims.

The present invention will be better described by some preferred embodiments thereof, provided as a non-limiting example, with reference to the enclosed drawings, in which:

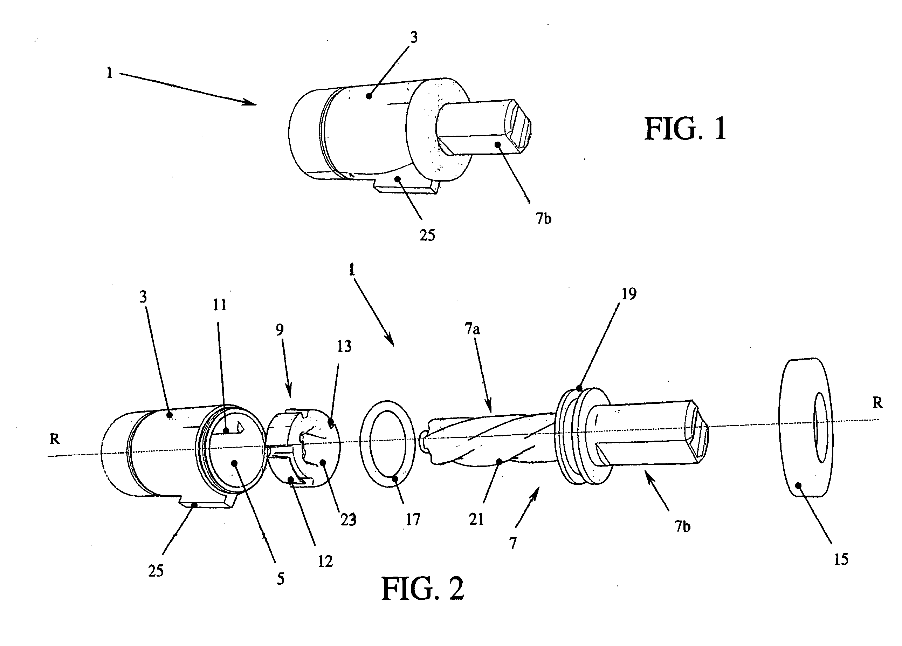

- Figure 1 shows a side perspective view of a preferred embodiment of the viscous braking device according to the present invention;
- Figure 2 shows an exploded perspective view of the viscous braking device of Figure 1;
- Figure 3 shows a perspective and partially sectioned exploded view of the viscous braking device according to the present invention in a first extreme operating position thereof;
- Figure 4 shows a perspective and partially sectioned exploded view of the viscous braking device according to the present invention in a second extreme operating position thereof; and
- Figures 5a and 5b respectively show front views of two opposite faces of a component of the viscous braking device according to the present invention.

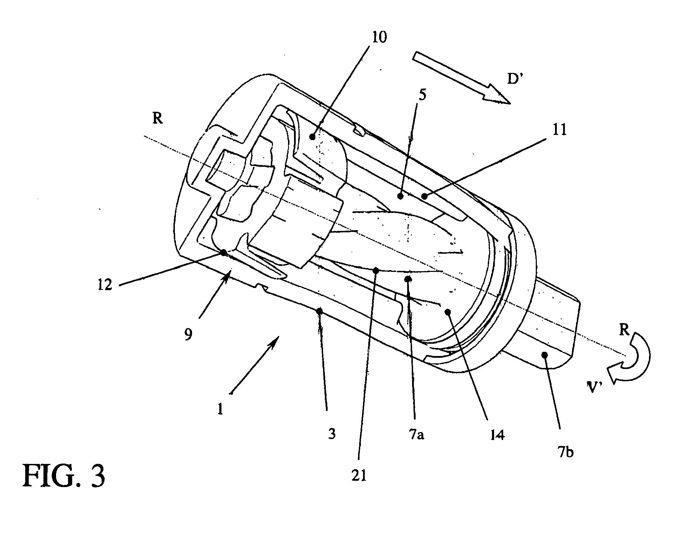

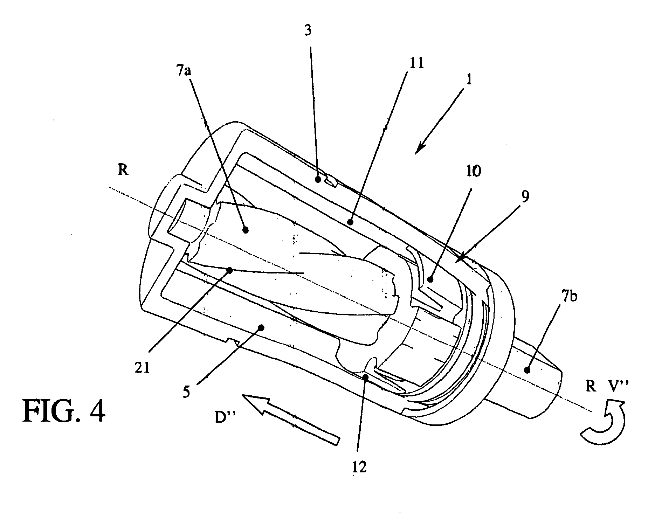

With reference to the Figures, it is possible to note that the viscous braking device 1 according to the present invention, suitable in particular to be used for braking the descent of the table-cover of a WC cup, comprises:
- at least one casing 3 equipped with at least one internal chamber 5 containing therein at least one viscous braking fluid;
- at least one braked rotating shaft 7, rotating around a longitudinal rotation axis R-R and having a first portion 7a arranged inside such internal chamber 5 and at least one second portion 7b arranged outside such internal chamber 5;
- at least one piston 9 sliding along such internal chamber 5, preferably along such rotation axis R-R, operatively cooperating with such first portion 7a of such braked rotating shaft 7 by interposing at least one screw-nut screw coupling adapted to slide such piston 9 along such rotation axis R-R according to a first direction D' or a second opposite direction D" depending on a first rotation direction V' (as shown, for example, in Figure 3) or un second rotation direction V" (as shown, for example, in Figure 4) of such shaft 7, such piston 9 being adapted to allow the viscous braking of the rotation of such shaft 7 in a first rotation direction V' around such rotation axis R-R determining, by sliding along such rotation axis R-R along the first direction D', a compression of such viscous fluid against a compression wall 14 of such internal chamber 5, and to allow substantially a free rotation of such shaft 7 in a second rotation direction V" around such rotation axis R-R by sliding along such rotation axis R-R along the second direction D" without substantialy compression of such viscous fluid. Moreover, the internal chamber 5 is equipped with internal means adapted to prevent the piston 9 from rotating along any direction around such rotation axis R-R in relation to such internal chamber 5.

Moreover, the piston 9 can be equipped with at least one pair of valve means 10, 12 adapted to allow the controlled passage of the viscous fluid through il piston 9 itself during its sliding D' or D" along the rotation axis R-R imposed by the rotation V' or V" of the shaft 7 through the screw-nut screw coupling: in particular, such valve means 10, 12 are arranged and made in such a way as to offer different fluid-dynamic resistance depending on the sliding direction D' or D" of the piston 9 along the rotation axis R-R.

In particular, as can be noted in Figure 3, when the piston 9 slides along the first direction D' imposed by the rotation of the shaft 7 through the screw-nut screw coupling along the first rotation direction V', for example applying a twisting torque to the second external portion 7b of the shaft 7 itself (for example having to lower the table-cover of the WC to which the device 1 according to the present invention is coupled), in order to allow the necessary compression of the viscous fluid against the compression wall 14, the valve means 10, 12 are such as to allow the passage of such fluid through the piston 9, though having the necessary fluid-dynamic resistance to such passage to allow this compression and the related braking of the shaft 7 rotation. In a preferred embodiment, at least one of the valve means completely clogs the passage of the viscous fluid, that is therefore compelled to pass through suitable rackings (described below) whose section is variable to create the desired hourly law: however, the elastic response of the valve means can be such as to allow the immediate opening in case of forcing over the required speed to avoid damaging the device 1 according to the present invention. It is however possible to directly operate on the elasticity of such valve means to limit the torque produced also in its traditional use.

As can be noted instead in Figure 4, when the piston 9 slides along the second direction D" imposed by the rotation of the shaft 7 through the screw-nut screw coupling along the second rotation direction V", for example by always applying a twisting torque to the second external portion 7b of the shaft 7 itself (for example having to lift the table-cover of the WC to which the device 1 according to the present invention is coupled), in order to allow the free rotation of the shaft 7 itself, the valve means 10, 12 are such as to allow the free passage of such fluid through the piston 9 itself without substantially opposing any meaningful fluid-dynamic resistance to such passage.

In order to perform what has been described above, preferably, each one of such valve means 10, 12 is composed of at least one blade radially arranged around such piston 9, such blades having different elasticity in such a way as to oppose the required fluid-dynamic resistance to the passage of the viscous fluid between the piston 9 and the internal wall of the internal chamber 5 depending on the sliding direction D' or D" of the piston 9 alonbg the rotation axis R-R.

Obviously, the internal chamber 5 is suitably closed by at least one plug 15, preferably arranged coaxially to such rotation axis R-R and keyed-in around the second external portion 7b of the shaft 7, possibly by interposing sealing means adapted to prevent the viscous fluid from going out of the device 1, such sealing means comprising for example at least one annular gasket 17 housed inside a related recess 19 obtained around the shaft 7 coaxially to such rotation axis R-R for separating the first portion 7a from the second portion 7b: obviously, the sealing means can be made in any other way suitable for this purpose and, for example, can be composed of at least two annular gaskets or lip-, or labyrinth-type gaskets, etc.

Preferably, such compression wall 14 is an integral part of the shaft 7 in order to absorb the effort due to the high pressure and not to discharge it against the closing wall of the casing 3: in this way, the closing plug 15 of the internal chamber 5, from which the second portion 7b of the shaft 7 projects, can be easily assembled with a snap-type assembling instead of welding or other assembling means, that are more robust, but more critical, such as, for example, a ultrasound welding. This ultrasound welding, as known, when there is oil, is critical, since even a slight oiliness completely impairs the welding itself, and cannot be made between two different materials, like those that preferably compose the body 3 and the plug 15, that would instead be preferred to be used to optimise technologic performance and cost of the device 1 according to the present invention.

As described above, it can be noted how, in the device 1 according to the present invention, when braking, the force is wholly discharged between piston 9 and plug 15 that, in this way, is not advantageously stressed by the pressure created inside the internal chamber 5 between compression wall 14 and piston 9.

In order to make the above screw-nut screw coupling, preferably the first portion 7a of the shaft 7 is externally equipped with at least one suitable threading 21 adapted to operatively engage at least one corresponding threading 23 arranged through the piston 9, such threadings 21, 23 having a development axis coaxial with such rotation axis R-R.

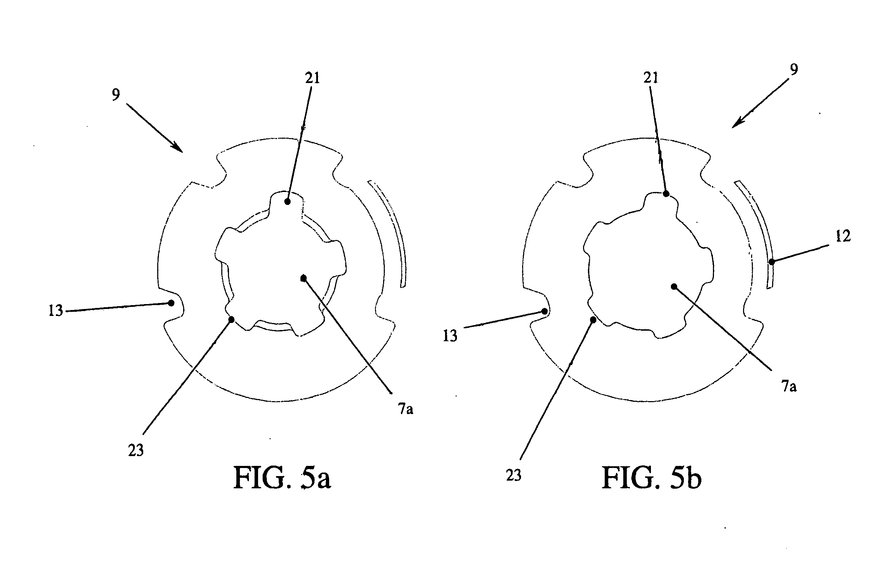

Preferably, as it is possible to note in Figures 5a (initial position of the piston 9 corresponding to Figure 3) and 5b (final position of the piston 9 corresponding to Figure 4), passing from the initial position to the final position of the piston 9, the measure of the web of the threading 21 of the first portion 7a changes along the rotation axis R-R in order to leave, respectively, a bigger or smaller passage for the viscous fluid between such threadings 21 and 23, allowing to further adjust the fluid-dynamic resistance offered to the compression of the fluid.

Preferably, the pitch of the threadings 21 and 23 is such that, in order to make the piston 9 pass from its initial position in Figure 3 to its final position in Figure 4 and vice versa, it is necessary to perform one complete revolution of the shaft 7, in the respective direction V' or V", around the rotation axis R-R.

Moreover, the threading 21 of the first portion 7a can be equipped with a suitable shaping adapted to allow managing the hourly law of the braking force. For the same purpose, it is possible to provide that the device 1 according to the present invention further comprises a suitable programming rod.

In particular, the internal means adapted to prevent the piston 9 from rotating along any direction around such rotation axis R-R in relation to the internal chamber 5, comprise at least one longitudinal rib 11 arranged along an internal wall of such internal chamber 5 in parallel with the rotation axis R-R, such longitudinal rib 11 being adapted to engage a corresponding seat 13 radially arranged around such piston 9.

Obviously, the device 1 according to the present invention is externally equipped on the casing 3 and on thea second portion 7b of the shaft 7, with suitable fastening means to the components whose relative rotation along the first direction V' must be viscously braked by the device 1. Preferably, in case of a specific application for braking the descent of the table-cover of the WC cup in which the device 1 according to the present invention can be interposed as hinge element between the fastening bracket of such table-cover to the cup and the table-cover itself, such fastening means comprise at least one key 25 externally arranged along the casing 3 in parallel with the rotation axis R-R, to allow fastening such casing 3 to such bracket, and at least one shaped profile obtained around such second portion 7b to allow the connection of the shaft 7 to the table-cover of such cup always in parallel with the rotation axis R-R.

## Claims

1. Viscous braking device (1), in particular for braking a descent of a table-cover of a WC cup, comprising:
- at least one casing (3) equipped with at least one internal chamber (5) containing therein at least one viscous braking fluid;
- at least one rotating brake shaft (7), rotating around a longitudinal rotation axis (R-R) and having a first portion (7a) arranged inside said internal chamber (5) and at least one second portion (7b) arranged outside said internal chamber (5);
- at least one piston (9) sliding inside said internal chamber (5), operatively cooperating with said first portion (7a) of said brake rotating shaft (7) by interposing at least one screw-nut screw coupling adapted to slide said piston (9) along said rotation axis (R-R) along a first direction (D') or a second opposite direction (D") depending on a first rotation direction (V') or a second rotation direction (V") of said shaft (7), said piston (9) being adapted to allow said viscous braking of a rotation of said shaft (7) in said first rotation direction (V') around said rotation axis (R-R) determining, by sliding along said rotation axis (R-R) along said first direction (D'), a compression of said viscous fluid against a compression wall (14) of said internal chamber (5), **characterised in that** said first portion (7a) of said shaft (7) is externally equipped with at least one threading (21) adapted to operatively engage at least one corresponding threading (23) arranged through said piston (9), said threadings (21, 23) having a development axis coaxial with said rotation axis (R-R), a measure of a web of said threading (21) of said first portion (7a) changing along said rotation axis (R-R) in order to leave a bigger or smaller passage for said viscous fluid between said threadings (21, 23).

2. Device (1) according to claim 1, **characterised in that** said piston (9) is adapted to allow substantially a free rotation of said shaft (7) in said second rotation direction (V") around said rotation axis (R-R) sliding along said rotation axis (R-R) along said second direction (D") without substantial compression of said viscous fluid.

3. Device (1) according to claim 1, **characterised in that** said internal chamber (5) is equipped with internal means adapted to prevent said piston (9) from rotating along any direction around said rotation axis (R-R) in relation to said internal chamber (5).

4. Device (1) according to claim 1, **characterised in that** said internal means adapted to prevent said piston (9) from rotating along any direction around said rotation axis (R-R) in relation to said internal chamber (5) comprise at least one longitudinal rib (11) arranged along an internal wall of said internal chamber (5) in parallel with said rotation axis (R-R), said longitudinal rib (11) being adapted to engage a corresponding seat (13) radially arranged around said piston (9).

5. Device (1) according to claim 1, **characterised in that** said piston (9) is equipped with at least one pair of valve means (10, 12) adapted to allow a controlled passage of said viscous fluid through said piston (9) during its sliding (D'; D") along said rotation axis (R-R) imposed by said rotation (V'; V") of said shaft (7) through said screw-nut screw coupling.

6. Device (1) according to claim 5, **characterised in that**, during said sliding of said piston (9) along said first direction (D'), said valve means (10, 12) allow said passage of said fluid through said piston (9) though having a necessary fluid-dynamic resistance to said passage, to allow said compression, while during said sliding of said piston (9) along said second direction (D"), said valve means (10, 12) allow a free passage of said fluid through said piston (9) without substantially opposing any meaningful fluid-dynamic resistance to said passage.

7. Device (1) according to claim 5 or 6, **characterised in that** each one of said valve means (10, 12) is composed of at least one blade radially arranged around said piston (9), said blades having different elasticity in such a way as to oppose said required fluid-dynamic resistance to said passage of said viscous fluid between said piston (9) and an internal wall of said internal chamber (5) depending on said sliding direction (D'; D") of said piston (9) along said rotation axis (R-R).

## Patentansprüche

1. Viskose Bremsvorrichtung (1) insbesondere für die Bremsung beim Absenken eines WC-Deckels, die folgendes enthält:
- Mindestens einen Behälter (3), der mit mindestens einer internen Kammer (5) ausgestattet ist, die mindestens eine viskose Bremsflüssigkeit enthält;
- Mindestens eine Bremsdrehwelle (7), die sich um eine longitudinale Drehachse (R-R) dreht, und die einen ersten Teil (7a) hat, der in der internen Kammer (5) angebracht ist, und mindestens einen zweiten Teil (7b), der außerhalb der genannten internen Kammer (5) angebracht ist;
- Mindestens einen Schiebekolben (9) in der genannten internen Kammer (5), der operativ mit dem genannten ersten Teil (7a) der genannten Bremsdrehwelle (7) durch Dazwischenlegen von mindestens einer Schrauben-Mutter-Verbindung zusammenarbeitet, die dazu dient, den genannten Kolben (9) längs der Drehachse (R-R) gemäß einer ersten Richtung (D') oder einer zweiten entgegen gesetzten Richtung (D") aufgrund einer ersten Drehrichtung (V') oder einer zweiten Drehrichtung (V") der genannten Welle (7) gleiten zu lassen, der genannte Kolben (9) dient dazu, die genannte viskose Bremsung einer Drehung der genannten Welle (7) in der genannten ersten Drehrichtung (V') um die genannte Drehachse (R-R) zu ermöglichen, wobei er durch das Gleiten längs der genannten Drehachse (R-R) gemäß der genannten ersten Richtung (D') eine Kompression der genannten viskosen Flüssigkeit an einer Kompressionswand (14) der genannten internen Kammer (5) auslöst,
und **dadurch gekennzeichnet ist, dass** der genannte erste Teil (7a) der genannten Welle (7) außen mit mindestens einem Gewinde (21) ausgestattet ist, das dazu dient, operativ mindestens ein entsprechendes Gewinde (23) zu spannen, das durch den genannten Kolben (9) angebracht wird, die genannten Gewinde (21, 23) haben eine Achse mit koaxialer Ausdehnung an der genannten Drehachse (R-R), ein Kernmaß des genannten Gewindes (21) des genannten ersten Teils (7a) ändert sich längs der genannten Drehachse (R-R), um mehr oder weniger einen Durchfluss der genannten Bremsflüssigkeit zwischen den genannten Gewinden (21, 23) zuzulassen.

2. Vorrichtung (1) gemäß Patentanspruch 1, die **dadurch gekennzeichnet ist, dass** der genannte Kolben (9) dazu dient, grundlegend eine freie Drehung der genannten Welle (7) in der genannten zweiten Drehrichtung (V") um die genannte Drehachse (R-R) zu ermöglichen, indem er an der genannten Drehachse (R-R) gemäß der genannten zweiten Drehrichtung (D") ohne grundlegende Kompression der genannten viskosen Flüssigkeit entlang gleitet.

3. Vorrichtung (1) gemäß Patentanspruch 1, die **dadurch gekennzeichnet ist, dass** die genannte interne Kammer (5) mit internen Mitteln ausgestattet ist, die dazu dienen, zu verhindern, dass sich der genannte Kolben (9) im Verhältnis zur genannten internen Kammer (5) in einer beliebigen Richtung um die genannte Drehachse (R-R) dreht.

4. Vorrichtung (1) gemäß Patentanspruch 1, die **dadurch gekennzeichnet ist, dass** die genannten internen Mittel, die dazu dienen, zu verhindern, dass sich der genannte Kolben (9) im Verhältnis zur genannten internen Kammer (5) in einer beliebigen Richtung um die genannte Drehachse (R-R) dreht, mindestens eine Längsrippe (11) enthalten, die längs einer Innenwand der genannten internen Kammer (5) parallel zur genannten Drehachse (R-R) angebracht ist, die genannte Längsrippe (11) dient dazu, eine entsprechende Aufnahme (13) zu spannen, die radial um den genannten Kolben (9) angebracht ist.

5. Vorrichtung (1) gemäß Patentanspruch 1, die **dadurch gekennzeichnet ist, dass** der genannte Kolben (9) mit mindestens einem Paar Ventilvorrichtungen (10, 12) ausgestattet ist, die dazu dienen, einen kontrollierten Durchfluss der genannten viskosen Flüssigkeit durch den genannten Kolben (9) zu ermöglichen, während dieser (D'; D") an der genannten Drehachse (R-R) entlang gleitet, was durch die genannte Drehung (V'; V") der genannten Welle (7) durch die genannte Schrauben-Mutter-Verbindung auferlegt wird.

6. Vorrichtung (1) gemäß Patentanspruch 5, die **dadurch gekennzeichnet ist, dass** die genannten Ventilvorrichtungen (10, 12) beim Gleiten des genannten Kolbens (9) längs der genannten ersten Richtung (D') den genannten Durchfluss der genannten Flüssigkeit durch den genannten Kolben (9) ermöglichen, obwohl sie den notwendigen Strömungswiderstand gegen den Durchfluss leisten, um die genannte Kompression zu ermöglichen, während die genannten Ventilvorrichtungen (10, 12) beim Gleiten des genannten Kolbens (9) längs der genannten zweiten Richtung (D") einen freien Durchfluss der genannten Flüssigkeit durch den Kolben (9) ermöglichen, ohne im Wesentlichen einen bedeutenden Strömungswiderstand gegen den genannten Durchfluss zu leisten.

7. Vorrichtung (1) gemäß Patentanspruch 5 oder 6, die **dadurch gekennzeichnet ist, dass** jede der genannten Ventilvorrichtungen (10, 12) mindestens aus einer Lamelle besteht, die radial um den genannten Kolben (9) angebracht ist, die genannten Lamellen haben eine differenzierte Elastizität, sodass sie den erforderlichen genannten Strömungswiderstand gegen den Durchfluss der genannten viskosen Flüssigkeit zwischen dem genannten Kolben (9) und einer Innenwand der genannten internen Kammer (5) aufgrund der genannten Gleitrichtung (D'; D") des genannten Kolbens (9) längs der genannten Drehachse (R-R) leisten.

## Revendications

1. Dispositif de freinage visqueux (1), en particulier pour le freinage de la descente d'un abattant d'une cuvette d'un WC, comprenant:
- au moins une enveloppe (3) dotée d'au moins une chambre interne (5) contenant à l'intérieur au moins un fluide visqueux de freinage;
- au moins un arbre tournant de frein (7), tournant autour d'un axe de rotation longitudinal (R-R) et ayant une première portion (7a) disposée à l'intérieur de ladite chambre interne (5) et au moins une seconde portion (7b) disposée à l'extérieur de ladite chambre interne (5);
- au moins un piston (9) coulissant à l'intérieur de ladite chambre interne (5) coopérant en mode opératif avec ladite première portion (7a) dudit arbre tournant de frein (7) au moyen de l'interposition d'au moins un accouplement vis-écrou apte à faire coulisser ledit piston (9) le long du dit axe de rotation (R-R) selon une première direction (D') ou une seconde direction opposée (D") en fonction d'un première direction de rotation (V') ou une seconde direction de rotation (V") dudit arbre (7), ledit piston (9) étant apte à permettre ledit freinage visqueux d'une rotation dudit arbre (7) dans ladite première direction de rotation (V') autour dudit axe de rotation (R-R) en déterminant, en coulissant le long dudit axe de rotation (R-R) selon ladite première direction (D'), une compression dudit fluide visqueux contre une paroi de compression (14) de ladite chambre interne (5),
**caractérisé par le fait que** ladite première portion (7a) dudit arbre (7) est dotée à l'extérieur d'au moins un filetage (21) apte à engager en mode opératif au moins un filetage correspondant (23) disposée à travers ledit piston (9), lesdits filetages (21, 23) ayant un axe de développement coaxial audit axe de rotation (R-R), une mesure d'un noyau dudit filetage (21) de ladite première portion (7a) en variant le long du dit axe de rotation (R-R) pour laisser plus ou moins de passage pour ledit fluide visqueux entre lesdits filetages (21, 23).

2. Dispositif (1) selon la revendication 1, **caractérisé par le fait que** ledit piston (9) est apte à permettre substantiellement une libre rotation dudit arbre (7) dans ladite seconde direction de rotation (V") autour dudit axe de rotation (R-R) en coulissant le long dudit axe de rotation (R-R) selon ladite seconde direction (D") sans compression substantielle dudit fluide visqueux.

3. Dispositif (1) selon la revendication 1, **caractérisé par le fait que** ladite chambre interne (5) est dotée de moyens internes aptes à empêcher ledit piston (9) de tourner dans toute direction autour dudit axe de rotation (R-R) relativement à ladite chambre interne (5).

4. Dispositif (1) selon la revendication 1, **caractérisé par le fait que** lesdits moyens internes aptes à empêcher audit piston (9) de tourner dans toute direction autour dudit axe de rotation (R-R) relativement à ladite chambre interne (5) comprennent au moins une nervure longitudinale (11) disposée le long d'une paroi interne de ladite chambre interne (5) parallèlement audit axe de rotation (R-R), ladite nervure longitudinale (11) étant apte à occuper un logement correspondant (13) disposé radialement autour dudit piston (9).

5. Dispositif (1) selon la revendication 1, **caractérisé par le fait que** ledit piston (9) est doté d'au moins un couple de moyens valvulaires (10, 12) aptes à permettre un passage contrôlé dudit fluide visqueux à travers ledit piston (9) pendant son coulissement (D'; D") le long du dit axe de rotation (R-R) imposé par ladite rotation (V'; V") dudit arbre (7) à travers ledit accouplement vis-écrou.

6. Dispositif (1) selon la revendication 5, **caractérisé par le fait que** pendant ledit coulissement dudit piston (9) le long dite première direction (D') lesdits moyens valvulaires (10, 12) permettent ledit passage dudit fluide à travers ledit piston (9) bien que présentant une résistance nécessaire du fluide dynamique audit passage pour permettre dite compression, tandis que pendant ledit coulissement dudit piston (9) le long de ladite seconde direction (D") lesdits moyens valvulaires (10, 12) permettent un libre passage dudit fluide à travers ledit piston (9) sans substantiellement opposer aucune résistance du fluide dynamique significative audit passage.

7. Dispositif (1) selon la revendication 5 ou 6, **caractérisé par le fait que** chacun desdits moyens valvulaires (10, 12) est composé d'au moins une lamelle disposée radialement autour dudit piston (9), lesdites lamelles ayant des élasticités différenciées de façon telle à opposer ladite résistance du fluide dynamique demandée audit passage dudit fluide visqueux entre ledit piston (9) et une paroi interne de ladite chambre interne (5) en fonction de ladite direction de coulissement (D'; D") dudit piston (9) le long du dit axe de rotation (R-R).
